# EUROPÄISCHE PATENTANMELDUNG

(11) **EP 0 584 515 A1**
(43) Veröffentlichungstag der Anmeldung: **02.03.1994**
(21) Anmeldenummer: 93111400.3
(22) Anmeldetag: 15.07.1993
(51) Int. Cl.: F16J 15/14, B41M 1/12

(54) **Flachdichtungsmaterial und Verfahren zur Herstellung einer Flachdichtung**

(30) Priorität: 31.07.1992 DE 4225379
(71) Anmelder: REINZ-DICHTUNGS-GMBH, D-89233 Neu-Ulm (DE)
(72) Erfinder: Schuppler, Wolfgang, D-72236 Balingen (DE); Sroka, Michael, D-89275 Elchingen (DE); Ebersberger, Fritz, D-89233 Neu-Ulm-Reutti (DE); Österle, Kurt, D-89605 Altheim (DE)
(74) Vertreter: Weber, Otto Ernst, Dipl.-Phys.

(57) **Zusammenfassung**

Die Erfindung betrifft ein Flachdichtungsmaterial und ein Verfahren zur Herstellung einer Flachdichtung. Als Flachdichtungsmaterial wird bei dem erfindungsgemäßen Verfahren bevorzugt ein Endlosband eines Trägermaterials verwendet, das ein- oder zweiseitig mit einer Dichtungsschicht bedruckt ist. Das fertig bedruckte Endlosband wird entsprechend der gewünschten Form der Flachdichtung ausgestanzt.

## Beschreibung

Die Erfindung betrifft ein Flachdichtungsmaterial gemäß Anspruch 1 und ein Verfahren zur Herstellung einer Flachdichtung gemäß Anspruch 6.

In der Dichtungstechnik werden häufig Dichtungen eingesetzt, welche aus einem Trägermaterial bestehen, auf das im Siebdruckverfahren Dichtwulste aufgebracht werden. Ist eine beidseitige Beschichtung des Trägermaterials mit den Dichtwulsten erforderlich, so müssen beide Seiten der Dichtung einzeln nacheinander bedruckt werden. Dieser Druckvorgang ist sehr zeitaufwendig und daher kostenintensiv. In Fällen, bei denen spezielle Dichtwulstgeometrien auf dem Träger benötigt werden, ist dieses Verfahren jedoch unverzichtbar. In letzter Zeit gewinnen zunehmend Dichtungen an Bedeutung, die keine speziellen geometrischen Strukturen benötigen, sondern die vollflächig mit einer Dichtungsstruktur, z.B. einer netz-, waben- oder gitterartigen Struktur versehen sind. Eine derartige Struktur ist in der DE 37 24 515 A1 beschrieben. Auch hier wird jede Seite der Dichtung einzeln bedruckt.

Als Trägermaterial werden metallische oder nicht-metallische Werkstoffe verwendet, auf die weiche bis harte, plastische oder elastische polymere Massen aufgedruckt sind, die zum Abdichten zweier zueinander im wesentlichen ruhender Flächen geeignet sind.

Es ist **Aufgabe** der Erfindung, ein Flachdichtungsmaterial der oben genannten Art zu schaffen, das kostengünstig herstellbar ist und ein Verfahren zur Herstellung dieses Flachdichtungsmaterials anzugeben.

Diese Aufgabe wird durch ein Flachdichtungsmaterial gemäß Anspruch 1 und ein Verfahren zur Herstellung einer Flachdichtung gemäß Anspruch 5 gelöst. Vorteilhafte Weiterbildungen der Erfindung sind Gegenstand der zugehörigen Unteransprüche.

Erfindungsgemäß wird als Flachdichtungsmaterial ein ein-oder beidseitig bedrucktes Trägermaterial verwendet, das als Meterware insbesondere als Endlosband hergestellt wird. Zur Herstellung der Flachdichtung werden aus diesem Flachdichtungsmaterial beliebig geformte Dichtungen ausgestanzt.

Das erfindungsgemäße Flachdichtungsmaterial eignet sich insbesondere für Flachdichtungen, die vollflächig mit einer gleichmäßigen geometrischen Struktur einer Dichtungsschicht bedruckt sind. Während als Trägermaterial ein metallisches oder nicht-metallisches Material mit saugenden oder nichtsaugenden Eigenschaften verwendet werden kann, besteht die Dichtungsschicht vorzugsweise aus Polyurethan, Silikon, Nitrilkautschuk, Fluorkautschuk, Epoxydharz oder Phenolharz, die im Siebdruck oder Rotationsdruckverfahren auf das Trägermaterial aufgebracht werden.

Die Form der geometrischen Struktur der Dichtungsschicht kann aus Kreisen, Quadraten, Rauten, Rechtecken, Fünfecken, Sechsecken oder Kombinationen dieser Strukturen bestehen, wobei diese Einzelformen lückenlos miteinander verbunden oder auch isoliert sein können.

Die Dicke der aufgedruckten Strukturen liegt in der Regel zwischen 0,01 und 2,5 mm, vorzugsweise zwischen 0,05 und 1,75 mm.

Anstelle eines endlosen Bandes können auch separate, jedoch größere Abschnitte verwendet werden, aus denen ebenfalls mehrere Dichtungen beliebiger Form ausgestanzt werden können.

In dem erfindungsgemäßen Verfahren zur Herstellung einer Flachdichtung wird das metallische oder nicht-metallische Trägermaterial als Halbfabrikat ein- oder beidseitig mit einer Dichtungsschicht versehen und anschließend werden die Außen- und Innenkonturen der Flachdichtung ausgestanzt.

Vorzugsweise wird als Trägermaterial ein Endlosband verwendet, das im Rotationsdruckverfahren kontinuierlich beschichtet wird. Das Verfahren eignet sich insbesondere zur Herstellung von Dichtungsschichten, die vollflächig auf das Trägermaterial aufgebracht werden.

Für ein einseitiges Bedrucken wird das Trägermaterial zwischen einer Anpreß- und einer Bedruckwalze einer Rotationsdruckanlage hindurchgezogen. Die Oberfläche der Bedruckwalze enthält eine eingearbeitete Struktur der gewünschten geometrischen Form, welche auf das Band übertragen werden soll. Die Vertiefungen in der Bedruckwalze werden mit der zu druckenden plastischen und hochviskosen Masse der Dichtungsschicht gefüllt. Beim Druckvorgang wird diese Masse auf eine Seite des Bandes übertragen. Dem Druckvorgang schließt sich ein Trocken- oder Härteprozeß an. Vorzugsweise werden speziell entwickelte Bedruckwalzen eingesetzt, die mit entsprechenden Vertiefungen versehen sind, deren Ausgestaltung ein gleichmäßiges Auftragen der Druckmasse und Übertragen der Druckmasse auf das Trägermaterial erlaubt. Dies wird vorzugsweise durch Querrippen im Grund der Vertiefungen und/oder durch eine genau angepaßte und sich innerhalb einer bestimmten geometrischen Struktur verändernden Tiefe und Form der Vertiefungen erreicht.

Zum zweiseitigen Bedrucken wird entweder die zweite Seite des Trägermaterials analog zur ersten Seite anschließend zwischen einer Bedruck- und einer Anpreßwalze der Rotationsdruckanlage bedruckt. Es können jedoch auch zwei Bedruckwalzen mit einer identischen geometrischen Struktur verwendet werden, durch die das Trägermaterial hindurchgeführt wird. Auf diese Weise kann in einem zeit- und kostengünstigen Verfahren die Bedruckung beider Seiten in einem einzigen Druckvorgang erfolgen.

Als Druckmassen für die Dichtungsschicht kommen alle polymeren Werkstoffe in Betracht, welche als pasteuse Massen in niedermolekularer oder gelöster Form in einem Viskositätsbereich von z.B. 10.000 bis 500.000 mpa.s hergestellt sind. Vorzugsweise werden Elastomere, wie Nitrilkautschuk, Fluorkautschuk usw., Thermoplaste, wie Polyethylen, Polypropylen etc. oder Duroplaste, wie Epoxide, verwendet. Weiterhin können geschäumte Massen und Mischungen verschiedener Polymere, z.B. Silikon/Epoxid als Dichtungsschicht verwendet werden.

Um die Auftragseigenschaften der Dichtungsschicht auf das Trägermaterial zu verbessern, kann das Trägermaterial mit einem Primer versehen sein oder versehen werden.

Nachfolgend wird die Erfindung anhand von zwei in der Zeichnung dargestellten Ausführungsbeispielen weiter beschrieben. Es zeigen:
- Fig. 1: eine Draufsicht auf einen Oberflächenausschnitt eines ersten Flachdichtungsmaterials mit einem hexagonalen Raster, etwa in Originalgröße;
- Fig. 2: eine Draufsicht auf eine Bedruckwalze für das Flachdichtungsmaterial gem. Fig. 1 mit einem vergrößerten Ausschnitt;
- Fig. 3: einen Querschnitt durch die Walzenoberfläche gem. Fig. 2 entland der Schnittlinie III - III;
- Fig. 4: eine Draufsicht auf einen vergrößerten Oberflächen-Ausschnitt einer weiteren Druckwalze mit einem tetragonalen Raster und
- Fig. 5 bis 7: jeweils einen Querschnitt durch die Walzenoberfläche gem. Fig. 4 entlang der Schnittlinien V-V, VI-VI bzw. VII-VII.

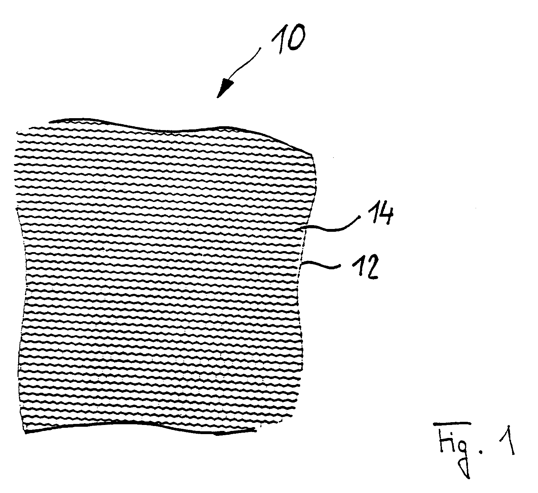

Ein Beispiel für die geometrische Struktur einer Dichtungsschicht ist beispielsweise in Fig. 1 wiedergegeben.

Dort ist die Oberfläche eines Flachdichtungsmaterials als Halbfabrikat 10 dargestellt. Auf einem Trägermaterial 12 der Flachdichtung ist eine Dichtungsschicht 14 in Art eines wabenartigen Rasters angeordnet, das flächig vollständig vernetzt ist und somit eine hohe Dichtigkeit gewährleistet, die unabhängig von der Form einer in das Flachdichtungsmaterial 10 eingestanzten Durchgangsöffnung ist. Das Flachdichtungsmaterial 10 läßt sich somit für beliebige Dichtungsformen verwenden. Es lassen sich aus dem Flachdichtungsmaterial 10, das in Form von Meterware, beispielsweise als Band oder Bandabschnitt, vorliegt, Dichtungsformen der unterschiedlichsten Art herstellen, so daß die Lagerhaltung für Halbfabrikate deutlich verringert werden kann.

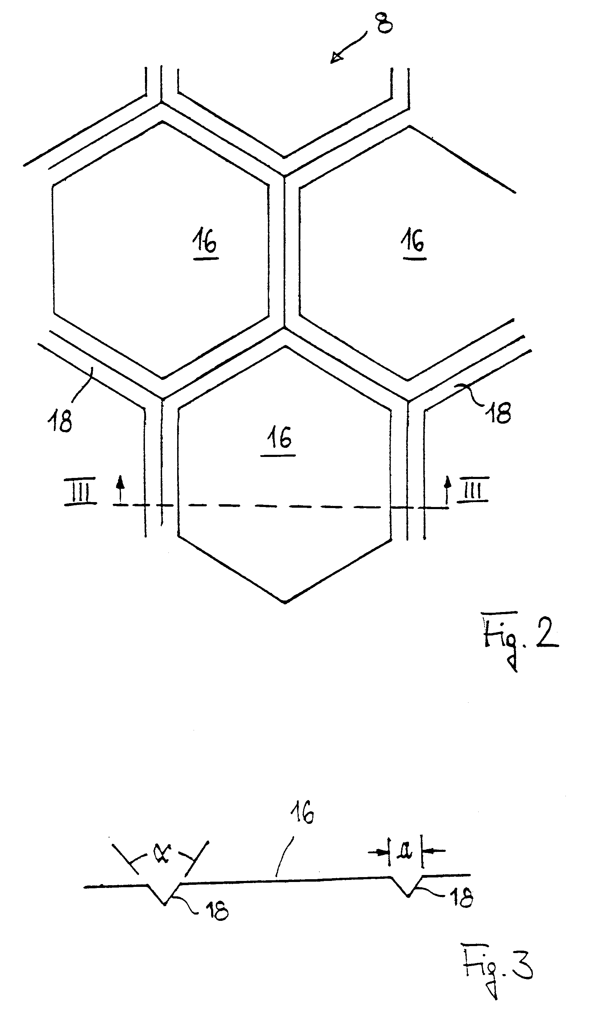

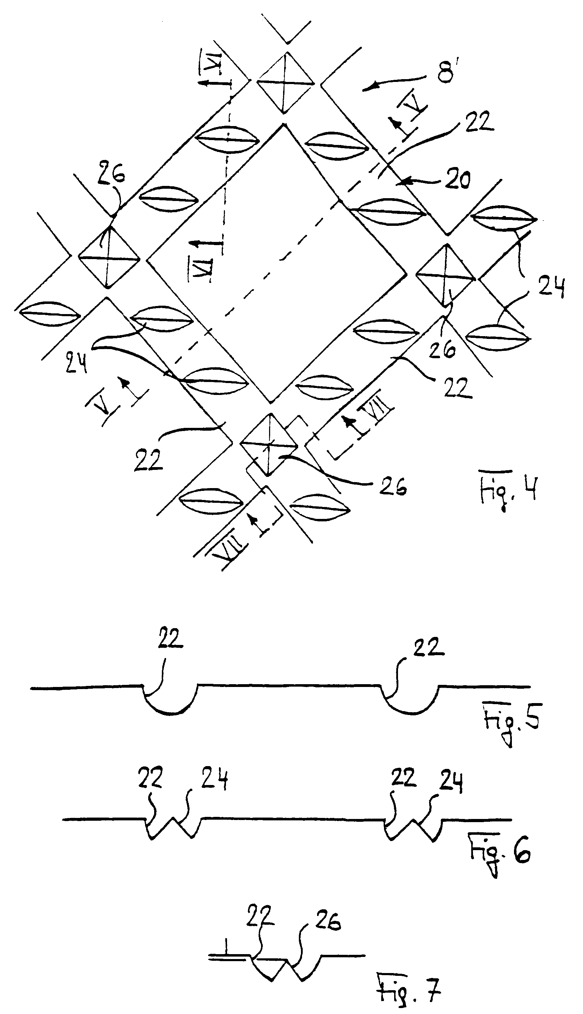

Ein derartiges Raster kann mittels einer Bedruckwalze 8 hergestellt werden, deren Mantelfläche in Fig. 2 ausschnittsweise in einer Draufsicht und in Fig. 3 im Querschnitt veranschaulicht ist. Aus der vergrößerten Darstellung gem. Fig. 2 und 3 wird ersichtlich, daß hexagonale, ebene Flächen 16 durch eingeprägte Vertiefungen 18 voneinander getrennt sind, welche Siebdruckmasse (nicht dargestellt) aufnehmen. In dem dargestellten Beispiel weisen die Vertiefungen 18 einen dreieckförmigen Querschnitt mit einer Basis a und einem Öffnungswinkel α auf. Typischerweise beträgt der Öffnungswinkel 80^{o} und die Basis ist bei einer Tiefe der Vertiefungen 18 von ca. 200 µm etwa 500 µm breit. Parallel verlaufende Vertiefungen 18 haben bei einem derartigen Beispiel einen Abstand von etwa 2 mm.

Das Beispiel gemäß Fig. 4 veranschaulicht in der Draufsicht eine Oberfläche einer weiteren Bedruckwalzte 8' mit einem Diagonal-Rillenraster 20 aus Vertiefungen 22 mit halbkreisförmigem Querschnitt (Fig. 5).

Diese Vertiefungen 22 sind mit Querrippen 24 versehen, die so ausgeformt sind, daß sie beim Druckvorgang einen gleichmäßigen Auftrag des Rasters von der Druckwalze 8' auf das Trägermaterial gewährleisten. Die Querrippen 24 sind unter einem Winkel von etwa 45^{o} zur Längsrichtung der Vertiefungen 22 ausgerichtet und weisen gem. Fig. 6 einen dreieckförmigen Querschnitt auf, wobei die Spitze bündig mit der Oberfläche der Dichtungsschicht 14 abschließt.

In jedem Kreuzungspunkt der Vertiefungen 22 liegen Pyramiden 26, die im Querschnitt gem. Fig. 7 veranschaulicht sind.

## Patentansprüche

1. Flachdichtungsmaterial (10) bestehend aus einem Endlosband eines Trägermaterials (12), das ein- oder beidseitig mit einer Dichtungsschicht (14) bedruckt ist.

2. Flachdichtungsmaterial nach Anspruch 1,
dadurch **gekennzeichnet,**
daß die Dichtungsschicht (14) vollflächig in einer vorgegebenen geometrischen Struktur auf zumindest eine Seite des Trägermaterials (12) aufgedruckt ist.

3. Flachdichtung nach Anspruch 2,
dadurch **gekennzeichnet,**
daß die geometrische Sruktur auf beiden Seiten gleich ist und deckungsgleich angeordnet ist.

4. Flachdichtungsmaterial nach einem der vorhergehenden Ansprüche,
dadurch **gekennzeichnet,**
daß die Dichtungsschicht aus Polyurethan, Silikon, Nitrilkautschuk, Fluorkautschuk, Epoxydharz oder Phenolharz besteht.

5. Flachdichtungsmaterial nach einem der Ansprüche 1 bis 4,
dadurch **gekennzeichnet,**
daß die Dicke der Dichtungsschicht (14) zwischen 0,01 und 2,5 mm, vorzugsweise zwischen 0,05 und 1,75 mm liegt.

6. Verfahren zur Herstellung einer Flachdichtung, bei dem ein metallisches oder nicht-metallisches Endlosband eines Trägermaterials als Halbfabrikat ein- oder beidseitig mit einer kontinuierlich aufgebrachten Dichtungsschicht beschichtet wird und bei dem anschließend die gewünschte Dichtungsform der Flachdichtung ausgestanzt wird.

7. Verfahren nach Anspruch 6,
dadurch **gekennzeichnet,**
daß die Dichtungsschicht auf das Trägermaterial gedruckt, insbesondere im Rotationsdruckverfahren aufgebracht wird.

8. Verfahren nach Anspruch 6 oder 7,
dadurch **gekennzeichnet,**
daß das Trägermaterial vollflächig bedruckt wird.

9. Verfahren nach Anspruch 8,
dadurch **gekennzeichnet,**
daß die Dichtungsschicht in einer netz- oder gitterartigen Struktur aufgedruckt wird.

10. Verfahren nach einem der Ansprüche 6 bis 9,
dadurch **gekennzeichnet,**
daß das Trägermaterial vor dem Beschichten mit der Dichtungsschicht mit einem Primer versehen wird.

11. Verfahren nach einem der Ansprüche 6 bis 10,
dadurch **gekennzeichnet,**
daß das Trägermaterial zur einseitigen Beschichtung zwischen einer Bedruck- und einer Anpreßwalze hindurchgeführt wird.

12. Verfahren nach Anspruch 9,
dadurch **gekennzeichnet,**
daß das Trägermaterial zur beidseitigen Beschichtung zwischen zwei Bedruckwalzen hindurchgeführt wird.

13. Verfahren nach Anspruch 12,
dadurch **gekennzeichnet,**
daß zwei Bedruckwalzen mit einer identischen Struktur verwendet werden, die synchron derart rotiert werden, daß die Strukturen beider Walzen im Durchlaßbereich des Trägermaterials übereinander zu liegen kommen.

14. Verfahren nach einem der Ansprüche 11 bis 13,
dadurch **gekennzeichnet,**
daß eine speziell entwickelte Bedruckwalze verwendet wird, die mit Vertiefung versehen ist, deren Ausgestaltung einen gleichmäßigen Auftrag der Druckmasse und Übertrag der Andruckmasse auf das Trägermaterial erlaubt.

15. Verfahren nach Anspruch 14,
dadurch **gekennzeichnet,**
daß Bedruckwalzen verwendet werden, die Querrippen im Grund der Vertiefungen aufweisen.
